# EUROPÄISCHE PATENTSCHRIFT

(11) **EP 4 320 370 B1**
(45) Veröffentlichungstag und Bekanntmachung des Hinweises auf die Patenterteilung: **09.09.2026**
(21) Anmeldenummer: 22721683.5
(22) Anmeldetag: 07.04.2022
(51) Int. Cl.: F16G 13/16

(54) **ENERGIEFÜHRUNGSKETTE MIT GLEITKUFE UND NACHRÜSTBARE GLEITKUFE HIERFÜR**
ENERGY CHAIN HAVING A SKID, AND SKID RETROFITTABLE THEREFOR
CHAÎNE PORTE-CÂBLES À PATIN DE GLISSEMENT ET PATIN DE GLISSEMENT POUVANT ÊTRE MONTÉ ULTÉRIEUREMENT PRÉVU À CET EFFET

(30) Priorität: 09.04.2021 DE 202021101925 U
(43) Veröffentlichungstag der Anmeldung: 14.02.2024
(73) Patentinhaber: igus SE & Co. KG, 51147 Köln (DE)
(72) Erfinder: STRACK, Stefan, 53639 Königswinter (DE); DOMMNIK, Jörg, 53819 Neunkirchen-Seelscheid (DE); HERMEY, Andreas, 53773 Hennef (DE)
(74) Vertreter: Lippert Stachow Patentanwälte Rechtsanwälte
(86) Internationale Anmeldenummer: PCT/EP2022/059283
(87) Internationale Veröffentlichungsnummer: WO 2022/214601

(56) Entgegenhaltungen:
- EP-B1- 3 189 568
- WO-A1-2007/121716
- DE-A1- 102006 019 966
- DE-U1- 202006 019 646
- DE-U1- 202008 005 165
- DE-U1- 202020 100 606

## Beschreibung

Die Erfindung betrifft allgemein eine Energieführungskette zur dynamischen Führung von Leitungen, wie z.B. Kabeln, Schläuchen oder dgl., zwischen zwei Anschlussstellen, von denen mindestens eine relativ zur anderen beweglich ist, sowie ein Kettenglied und eine nachrüstbare Gleitkufe für derartige Energieführungsketten.

Derartige Energieführungsketten umfassen eine Vielzahl von in Längsrichtung verbundenen Gliedern, die zueinander verschwenkbar sind und jeweils zwei Seitenlaschen und diese miteinander verbindende Querstege aufweisen, die einen Aufnahmeraum für die zu führenden Leitungen quer zur Längsrichtung abgrenzen. Bei Relativbewegung der Anschlussstellen ist die Energieführungskette unter Bildung zweier Trume, die über einen Umlenkbereich ineinander übergehen, verfahrbar.

Die Erfindung betrifft insbesondere eine Energieführungskette, die für lange Verfahrwege bestimmt ist. Bei langen Verfahrwegen kann der verfahrende Trum abschnittsweise auf dem ruhenden Trum aufliegen und verfahren. Bei langen Verfahrwegen wird die Energieführungskette meist auch in einer Führungsrinne geführt. In dem nicht auf den ruhenden Trum abgestützten Bereich kann der verfahrende Trum auf einer Gleitschiene verfahren.

Die gegenseitige Reibung der Trume und des beweglichen Trums auf der Gleitschiene verursacht Verschleiß. Um diesen Verschleiß zu reduzieren, ist es bekannt, Energieführungsketten mit Gleitkufen bzw. Gleitschuhen auszustatten, die aufeinander abgleiten. Alternativ kann Reibung gänzlich vermieden werden, wenn die Energieführungskette mit Laufrollen ausgerüstet ist.

Die vorliegende Erfindung betrifft eine gleitend aufliegend bzw. abgleitend angeordnete Energieführungskette, deren Obertum auf dem Untertrum abgleiten kann. Die Erfindung betrifft insbesondere eine solche sog. gleitende Energieführungskette die zum Abgleiten zumindest in einem Längsabschnitt an der im Umlenkbereich innenliegenden Seite mit Gleitkufen ausgestattet ist. Typischerweise ist jeweils ein Paar Gleitkufen an den Kettengliedern angeordnet.

Gleitkufen für Energieführungsketten, im Fachgebiet auch Gleitschuhe genannt, sind bspw. aus EP 0 415 029 A2 sowie DE 10 2006 019 966 A1 bekannt. Die Gleitkufen nach EP 0 415 029 A2 oder nach DE 10 2006 019 966 sind lösbar und mittels Verrastung an den Seitenlaschen befestigt. Dies erfordert spezielle Seitenlaschen, die mit Rastmitteln ausgestattet sind, welche mit den Rastmitteln der Gleitkufen zusammenwirken.

Es wurden bereits Gleitkufen entwickelt, welche an lösbaren Querstegen vorgesehen sind, welche sich zum Nachrüsten bestehender Energieführungsketten eignen, wie z.B. in DE202008005165U1. In einem Ausführungsbeispiel aus WO 2007/121716 A1 wird vorgesehen, dass jeweils ein Paar Gleitkufen einteilig mit einem Quersteg hergestellt ist. Die Gleitkufen liegen dabei in einer Betriebsposition am Kettenlied oberhalb der Schmalseiten der Seitenlaschen bzw. decken diese ab. Zum Nachrüsten bestehender Energieführungsketten müssen bei diesem Ausführungsbeispiel aus WO 2007/121716 allerdings die vorhandenen Querstege entfernt und durch Querstege mit Gleitkufen ersetzt werden. DE202008005165U1 erwähnt, dass die Gleitkufen auch durch Rastmittel an Querstegen befestigbar sein können, es werden jedoch keine Ausführungsbeispiele dazu offenbart.

Eine Aufgabe vorliegender Erfindung ist es mithin, ein einfacheres Nachrüsten von Energieführungsketten mit Gleitkufen zu entwickeln, welches insbesondere kein Öffnen der Kettenglieder erfordert und trotzdem einen ausreichenden Halt für die Gleitkufen bietet.

Gattungsgemäße Energieführungsketten für gleitende Anwendungen weisen an der im Umlenkbereich innenliegenden Seite und an den Gliedern an zumindest einem Längsabschnitt jeweils ein Paar Gleitkufen auf, wobei beide Gleitkufen eines Paars jeweils mittels einer Haltevorrichtung an einem Quersteg befestigt sind und jeweils in Wirkstellung eine Schmalseite einer der beiden Seitenlaschen übergreifen.

Die obengenannte Aufgabe wird bei einer gattungsgemäßen Energieführungskette nach Anspruch 1 bereits dadurch gelöst, dass zumindest der mit Gleitkufen versehene Quersteg an seinen beiden Enden, an denen er mit der jeweiligen Seitenlasche verbunden ist, jeweils eine Verbreiterung zur Seitenlasche hinaufweist. Die Haltevorrichtung weist zwei in Längsrichtung beabstandete und gegenüberliegende Halteelemente auf, mit welchen die Haltevorrichtung zwischen den Verbreiterungen auf den Quersteg aufsetzbar und seitlich nach außen in einen Eingriff mit einer der Verbreiterungen verschiebbar ist, in welchem die gegenüberliegenden Halteelemente zur Befestigung der Gleitkufe in Wirkstellung form- und/oder kraftschlüssig in bzw. hinter einen Bereich dieser Verbreiterung greifen. Somit ist kein Eingriff an der Seitenlasche notwendig.

Die Erfindung betrifft ferner ein Kettenglied nach Anspruch 2 und eine nachrüstbare Gleitkufe für eine Energieführungskette nach Anspruch 3. Eine gattungsgemäße Gleitkufe umfasst mindestens eine oberseitige Gleitfläche und eine unterseitige Haltevorrichtung zur Befestigung der Gleitkufe an einem Glied der Energieführungskette.

Erfindungsgemäß wird vorgeschlagen, dass die Haltevorrichtung zur Zusammenwirkung mit einer von zwei endseitigen Verbreiterungen eines Querstegs gestaltet ist und hierzu zwei in Längsrichtung beabstandete und einander gegenüberliegende Halteelemente aufweist, mit welchen die Haltevorrichtung zwischen den Verbreiterungen auf den Quersteg aufsetzbar und seitlich nach außen, insbesondere zu einem Ende des Querstegs bzw. zu einer der Seitenlaschen hin, in Eingriff mit einer der Verbreiterungen verschiebbar ist, wobei die gegenüberliegenden Halteelemente form- und/oder kraftschlüssig in bzw. hinter einen Bereich dieser Verbreiterung greifend gestaltet sind.

Die Gleitkufe ist insbesondere so ausgebildet, dass sie in ihrer Wirkstellung eine Schmalseite einer der beiden Seitenlaschen übergreift.

Die erfindungsgemäße Lösung hat den Vorteil, dass die Gleitkufen einfach und ohne spezielles Werkzeug montiert werden können; nämlich durch Aufsetzen auf den Quersteg und Schieben in die Eingriffsposition. Die Gleitkufen sind in der entgegengesetzten Reihenfolge unkompliziert vom Quersteg wieder abnehmbar, sodass sie nach Bedarf einfach ausgetauscht werden können. Die aufgesetzten Gleitkufen sind leicht zugängig, insbesondere ohne Demontage der Energieführungskette aus der Führungsrinne.

Die erfindungsgemäßen Gleitkufen sind einfach nachrüstbar, sodass eine bestehende Energieführungskette direkt in der Führungsrinne mit den Gleitkufen ausgestattet werden kann.

Weiterhin kann auch eine ursprünglich ohne Gleitkufen abgleitende Energieführungskette mit bereits abgenutzten Schmalseiten der Seitenlaschen nachträglich mit Gleitkufen ausgestattet werden. Somit kann eine ansonsten kritisch abgenutzte Kette mit Gleitschuhen ausgebessert werden, bevor der Verschleiß kritisch wird. So kann die Lebensdauer einer vorhandenen, bereits installierten Energieführungskette kostensparend verlängert werden.

Die Befestigung der Gleitkufen an dem Quersteg ist trotz der einfachen Montage und Demontage besonders robust. Zum einen bietet der größere Abstand zwischen den beiden Halteelementen einen längeren Hebel für die Reaktionskraft, die einem Lösen der Gleitkufe von Quersteg, welches durch Reibkräfte begünstigt wird, entgegenwirkt. Zum anderen ist die Gleitkufe beim Abmontieren bestimmungsgemäß in Richtung quer zur Längsrichtung der Energieführungskette auf dem Quersteg verschiebbar, d.h. quer zur Wirkungsrichtung der typischen Belastung bspw. durch die Reibkräfte.

Ein weiterer Vorteil der erfindungsgemäßen Lösung liegt in der kompakten und platzsparenden Befestigung der Gleitkufen, sodass ausreichend Platz auf dem Quersteg zum Anbringen von Trennstegen übrigbleibt. Trennstege können zum Unterteilen des Aufnahmeraumes eines Kettenglieds zwischen den Querstegen und parallel zur Seitenlaschen angebracht werden.

Der Begriff Längsrichtung bezieht sich allgemein auf die Richtung der Längserstreckung der Energieführungskette bzw. der in der Kette geführten bzw. zu führenden Leitungen. Die schwenkbar miteinander verbundenen Seitenlaschen eines Laschenstrangs der Energieführungskette sind bspw. in Längsrichtung miteinander verbunden. Zwei Laschenstränge der Energieführungskette sind durch Querstege in eine Querrichtung, insbesondere senkrecht zur Längsrichtung, miteinander verbunden. Zwei gegenüberliegende Seitenlaschen eines Glieds der Energieführungskette bzw. eines Kettenglieds sind in Querrichtung voneinander beabstandet. Die Richtung der Laschenhöhe bzw. die Höhenrichtung verläuft senkrecht zur Längs- und zur Querrichtung. Ein Kettenglied kann zwei Querstege aufweisen, die in der Höhenrichtung voneinander beabstandet sind. Eine Verfahrebene, in der die Energieführungskette verfahren kann, ist die Ebene, in der die Längs- und die Höhenrichtung liegt. Die Energieführungskette ist beim Verfahren um eine Umlenkachse gebogen bzw. umgelenkt, diese kann senkrecht zur Verfahrebene verlaufen.

Seitenlaschen und Querstege sind plattenartig ausgebildet. Eine Seitenlasche weist zwei Hauptseiten auf - eine Hauptseite, die die Innenfläche bildet, welche dem Aufnahmeraum des Kettenglieds zugewandt ist, und eine Hauptseite, die die Außenfläche bildet, welche dem Aufnahmeraum des Kettenglieds abgewandt ist. Eine Seitenlasche weist ferner zwei lange Schmalseiten auf, welche in die Längsrichtung erstreckt sind, und zwei kurze Schmalseiten, die in die Längsrichtung weisen. Ein Quersteg weist ebenfalls zwei Hauptseiten auf - eine Unterseite, die dem Aufnahmeraum des Kettenglieds zugewandt ist, und eine Oberseite, die dem Aufnahmeraum des Kettenglieds abgewandt ist. Die Begriffe Ober- und Unterseite werden insbesondere nicht im Bezug zu einer Vertikalen verwendet, da die Anordnung im Obertrum relativ zu der Vertikalen im Vergleich zum Untertrum umgekehrt ist. Der Quersteg weist ferner zwei Schmalseiten bzw. Stirnseiten auf, die sich in die Querrichtung erstrecken und in die Längsrichtung weisen, sowie zwei kurze Schmalseiten, die sich in die Längsrichtung erstrecken und Stützflächen zur Anlage an den Innenflächen der Seitenlaschen bilden.

Die Hauptseiten des Querstegs werden zu den Enden des Querstegs hin breiter. Diese endseitigen Verbreiterungen des Querstegs führen dazu, dass die endseitigen Stützflächen im Vergleich zum mittigen Querschnitt des Querstegs eine größere Abmessung in die Längsrichtung haben. Jeweils zwei Gleitkufen werden auf einen Quersteg, bezogen auf die Querrichtung, zwischen den endseitigen Verbreiterungen aufgesetzt und seitlich nach außen, d.h. zu den Verbreiterungen bzw. zu den Seitenlaschen hin, entlang des Querstegs verschoben, bis die Haltevorrichtung der jeweiligen Gleitkufe in den Eingriff mit der entsprechenden Verbreiterung kommt bzw. auf der Verbreiterung aufgesetzt wird. Die einander gegenüberliegenden und in die Längsrichtung voneinander beabstandeten Halteelemente der jeweiligen Gleitkufe greifen dabei form- und/oder kraftschlüssig in oder hinter dieser Verbreiterung bzw. in oder hinter die Stirnseiten des Querstegs im Bereich der Verbreiterung.

Die Halteelemente der Gleitkufe wirken mit den jeweiligen endseitigen Verbreiterungen des Querstegs in Eingriffsstellung zusammen, um die Gleitkufe, insbesondere gegen Verschiebung in Längsrichtung der Energieführungskette, sowie gegen Ablösen der Gleitkufe in Höhenrichtung des Kettenglieds, zu sichern. In anderen Worten sichern die Halteelemente die Gleitkufe gegen Verschiebung in der Verfahrebene der Energieführungskette, in der die Längsrichtung und die Höhenrichtung liegen.

Die Haltevorrichtung der Gleitkufe weist vorzugsweise mindestens ein Rastelement auf, welches mit einem Vorsprung und/oder einer Vertiefung am Quersteg verrastet, um die Gleitkufe gegen eine seitliche Verschiebung, d.h. Verschiebung entlang des Querstegs, in der Wirkstellung der Gleitkufe bzw. in der Eingriff-Stellung der Halteelemente mit der jeweiligen Verbreiterung zu sichern. In anderen Worten sichern die Rastelemente die Gleitkufe gegen Verschiebung senkrecht zur Verfahrebene der Energieführungskette.

In einer Ausführungsform kann der Quersteg an jeder seiner Verbreiterungen jeweils zwei stirnseitige Rastvorsprünge bzw. Rastnasen zum Verrasten mit den Gleitkufen aufweisen. Die Haltevorrichtung der Gleitkufe kann insbesondere zwei in Längsrichtung bzw. in die Richtung des Gleitens voneinander beabstandete Rastelemente aufweisen, welche jeweils mit einer von zwei stirnseitigen Rastnasen an der Verbreiterung des Querstegs rastend zusammenwirken. Die Rastelemente können bspw. als Rastkanten ausgeführt sein, die nach dem Einschieben der Gleitkufe in Rastposition bzw. in die bestimmungsgemäße Wirkstellung hinter die Rastnasen formschlüssig hintergreifen.

Alternativ oder ergänzend können die Rastelemente der Gleitkufen mit einer oberseitigen Werkzeugöffnung, die am Quersteg zum Abtrennen des Querstegs von der Seitenlasche vorgesehen sein kann, rastend zusammenwirken. In diesem Fall können die Rastelemente insbesondere als Rastnocken ausgebildet sein, die in der Wirkstellung der Gleitkufe in die Werkzeugöffnung eingreifen.

Die Gleitkufe kann insbesondere plattenartig ausgeführt sein und zwei Hauptseiten aufweisen - eine Hauptseite, auch Oberseite genannt, die die Gleitfläche bildet, sowie die der Gleitfläche abgewandte Hauptseite, auch Unterseite bzw. Befestigungsseite genannt. Die Begriffe Unterseite und Oberseite beziehen sich nicht auf eine bestimmte vertikale Anordnung. Ferner kann die Gleitkufe zwei in die Längsrichtung erstreckte Schmalseiten sowie zwei in die Längsrichtung weisenden Stirnseiten aufweisen.

Die Halteelemente der Gleitkufe sind als einander zugewandte Haltebacken, Halteklauen oder als Vorsprünge mit einander zugewandten Haltenuten ausgeführt.

Die Halteelemente können an einer bzw. von einer der Gleitfläche abgewandten Unterseite bzw. Befestigungsseite der Gleitkufe vorstehen.

In einer Ausführungsform greifen die Halteelemente um die in die Längsrichtung weisenden Stirnseiten des zusammenwirkenden Bereichs der Verbreiterung und hintergreifen die Verbreiterung bzw. den Quersteg im Bereich der Verbreiterung.

Alternativ oder ergänzend können die Halteelemente formschlüssig mit einer Vertiefung oder einem Vorsprung, insbesondere mit einer Befestigungsrippe, an den in die Längsrichtung weisenden Stirnseiten des entsprechenden Bereichs der Verbreiterung zusammenwirken.

Die Haltevorrichtung weist ein Paar in Längsrichtung voneinander und in die Querrichtung von den Halteelementen beabstandeter Führungselemente auf, die bei einem Verschieben der Gleitkufe in die Wirkstellung an den Stirnseiten des Querstegs abgleiten und in der Wirkstellung anliegen. Die Führungselemente bieten eine zusätzliche Stabilisierung der Gleitkufe.

In einer Ausführungsform kann die Gleitkufe eine oberseitige Gleitfläche aufweisen die zwei Gleitbereiche umfasst: einen seitlich äußeren Gleitbereich zum Übergreifen einer Schmalseite der jeweiligen Seitenlasche in Wirkstellung und einen in Längsrichtung versetzten inneren Gleitbereich, unterhalb welchem die Haltevorrichtung angeordnet ist. Der äußere Gleitbereich kann vorzugsweise freitragend sein. Der äußere Gleitbereich ist relativ zur Querrichtung weiter vom Aufnahmeraum des Kettenglieds bzw. von der Mitte des Querstegs entfernt als der innere Gleitbereich.

Unterhalb des äußeren Gleitbereichs kann vorzugsweise eine unterseitige Auflagefläche zum Aufliegen auf der Schmalseite der jeweiligen Seitenlasche vorgesehen sein. Wenn die Gleitkufe auf einer anderen Gleitkufe, auf einer Schmalseite einer Seitenlasche oder aber auf einer Gleitschiene aufgelegt wird, kann vorzugsweise zuerst die Auflagefläche der Gleitkufe zum Aufliegen bzw. Anliegen auf der durch die Gleitkufe geschützten Schmalseite der jeweiligen Seitenlasche kommen bevor die Haltevorrichtung der Gleitkufe, welche die Gleitkufe am Quersteg hält, belastet wird. Das ist von Vorteil, um die Einwirkung einer Scherkraft auf die Haltevorrichtung der Gleitkufe möglichst gering zu halten.

Der Versatz der Gleitbereiche in der Längsrichtung relativ zueinander kann insbesondere dazu dienen, ein Zusammenstoßen bzw. eine Kollision der Gleitkufen, die an aufeinanderfolgenden Seitenlaschen befestigt sind, in voll abgewinkelter Stellung der Seitenlaschen zueinander zu vermeiden.

Die Gleitkufe kann vorzugsweise stirnseitige Auflaufschrägen aufweisen, die in Längsrichtung weisen. Die Auflaufschrägen vermeiden Störkanten und können insbesondere dazu dienen, beim Verfahren ein ungewolltes Verkanten bzw. Verhaken der Gleitkufe aufeinanderfolgender Kettenglieder zu vermeiden. Besonders bevorzugt sind die Auflaufschrägen an jedem Gleitbereich vorgesehen.

Die Halteelemente der Gleitkufe können vorzugsweise Anlageflächen aufweisen, die komplementär bzw. kongruent zu stetig aufweitenden bzw. in die Längsrichtung stetig auseinandergehenden Stirnflächen bzw. Flächen der Stirnseiten an Enden des Querstegs bzw. an seinen endseitigen Verbreiterungen geformt sein können. Dadurch kann die wirksame Eingriffsfläche, über die die Gleitkufe im Eingriff mit dem Quersteg steht, vergrößert werden, um eine besonders robuste Befestigung der Gleitkufe am Quersteg zu erreichen.

Die Seitenlaschen und die Querstege können vorzugsweise aus Kunststoff, insbesondere aus einem verstärkten Kunststoff hergestellt sein. Die Seitenlaschen und/oder Querstege können auch aus Metall gefertigt sein.

Die Gleitkufe kann vorzugsweise als separates einstückiges Kunststoffteil, insbesondere Spritzgussteil, hergestellt sein.

Die Gleitkufe kann vorzugsweise aus einem speziellen tribologisch optimierten Kunststoff hergestellt sein bzw. zumindest an den Gleitflächen einen solchen Kunststoff aufweisen. Der Kunststoff ist vorzugsweise so gewählt, dass er bei Reib-Paarung mit demselben Kunststoff gegenüber Reibung des Seitenlaschenmaterials aufeinander optimiertes Abriebverhalten, Verschleißverhalten und/oder Reibverhalten aufweist. Der tribologisch optimierte Kunststoff kann insbesondere einen günstigeren Reibkoeffizienten aufweisen und/oder ein Tribopolymer mit eingebundenen Schmierstoffen, z.B. Feststoffpartikeln, oder auch flüssigen bzw. wachsartigen Schmierstoffen.

Der Quersteg kann mit seitlichen Stützflächen seiner Verbreiterungen an einer Innenfläche der jeweiligen Seitenlasche anliegen und bevorzugt mit dessen Enden über die nächste Lasche ragen. Somit können die Verbreiterungen der Querstege jeweils zwei Seitenlaschen in die Querrichtung stützen.

Der Quersteg ist vorzugsweise lösbar durch ein Hebelmechanismus mit einem Befestigungsvorsprung der Seitenlasche befestigt. Hierbei weist die Gleitkufe an ihrer Oberseite bzw. an ihrer die Gleitfläche aufweisenden Hauptseite eine Aussparung für einen Betätigungshebel des Querstegs auf. Ein bevorzugter Befestigungs- und Hebelmechanismus ist in der veröffentlichten Schrift WO 2020/152263 A1 der Anmelderin beschrieben, wobei dortige Beschreibung des Befestigungs- und Hebelmechanismus hier durch Verweis einbezogen wird.

In einer weiteren Ausführungsform ist der Quersteg rastend mit einem Rasthorn befestigt, welcher an der Innenfläche der jeweiligen Seitenlasche vorgesehen sein kann.

Der Quersteg kann zwei Zahnleisten aufweisen, die sich zwischen den beiden Enden des Querstegs erstrecken und zur Befestigung der Trennstege dienen. Die Zahnleisten können insbesondere an der Unterseite des Querstegs, die in der bestimmungsgemäßen Position des Querstegs in einem Kettenglied dem Aufnahmeraum zugewandt ist, ausgebildet sein. Alternativ oder ergänzend können die Zahnleisten innerhalb stirnseitiger Nuten des Querstegs angeordnet sein.

Die Erfindung betrifft ferner ein Kettenglied für eine Energieführungskette nach dem Oberbegriff aus Anspruch 1, umfassend zwei Seitenlaschen und zwei diese verbindenden Querstege, wobei zumindest ein Quersteg zwei Gleitkufen gemäß einer der vorstehenden Ausführungsformen umfasst.

Weitere Einzelheiten, Merkmale und Vorteile der Erfindung ergeben sich - ohne Beschränkung der Allgemeinheit der vorstehenden Lehre - aus der nachfolgenden, ausführlichen Beschreibung bevorzugter Ausführungsbeispiele anhand der beiliegenden Abbildungen. Hierbei zeigen:

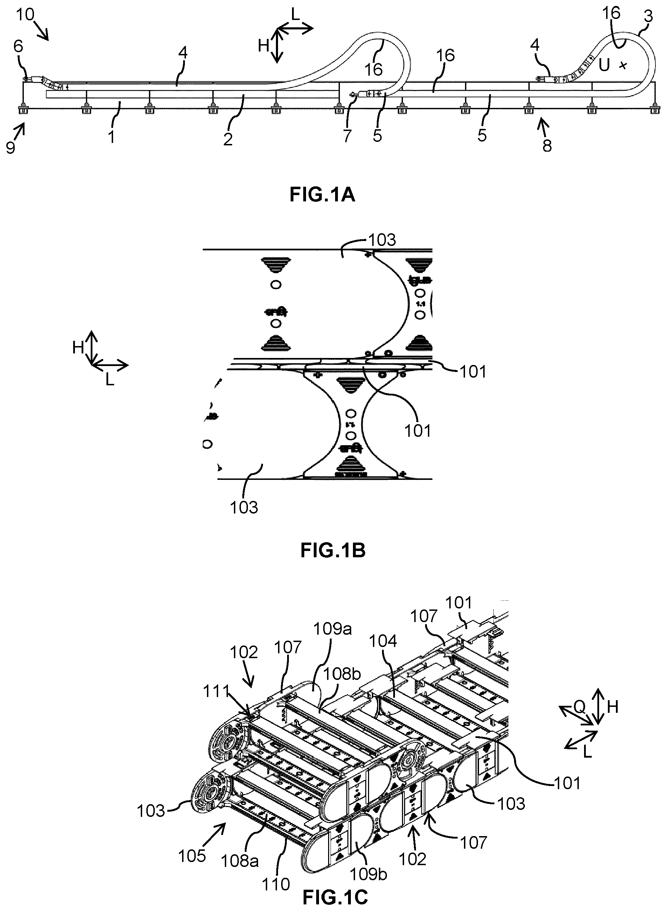

**FIG.1A-1C****:** eine schematische Seitenansicht einer Energieführungsanordnung für lange Verfahrwege **(****FIG.1A****);** ein Teilstück der Energieführungskette nach FIG.1A in Seitenansicht, in einer Zwischenstellung mit einem Obertrum, der auf dem Untertrum aufliegt **(****FIG.1B****);** sowie ein Teilstück der Energieführungskette nach FIG.1A in perspektivischer Ansicht **(****FIG.1C****);**

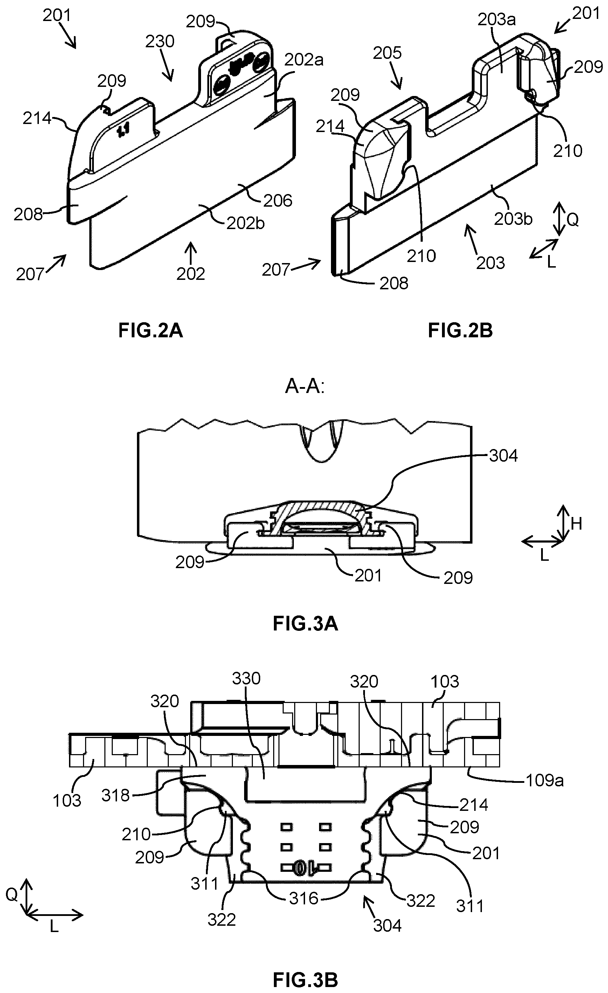

**FIG.2A-2B****:** ein erstes Ausführungsbeispiel einer Gleitkufe in perspektivischer Ansicht;

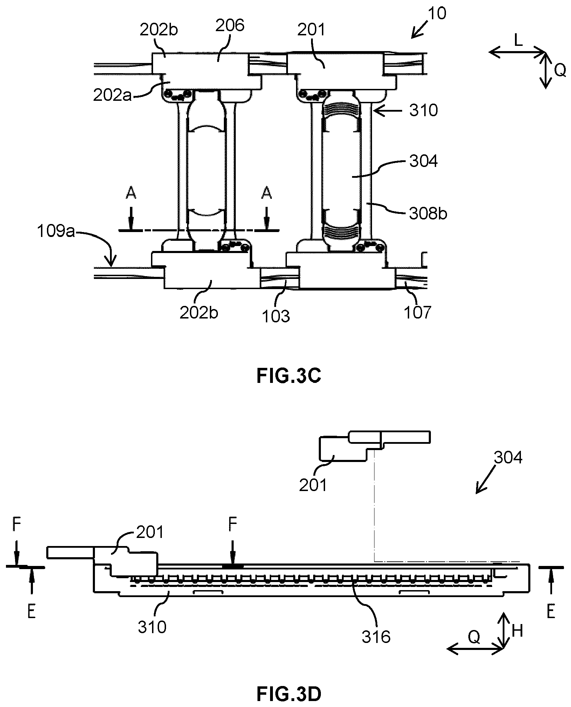

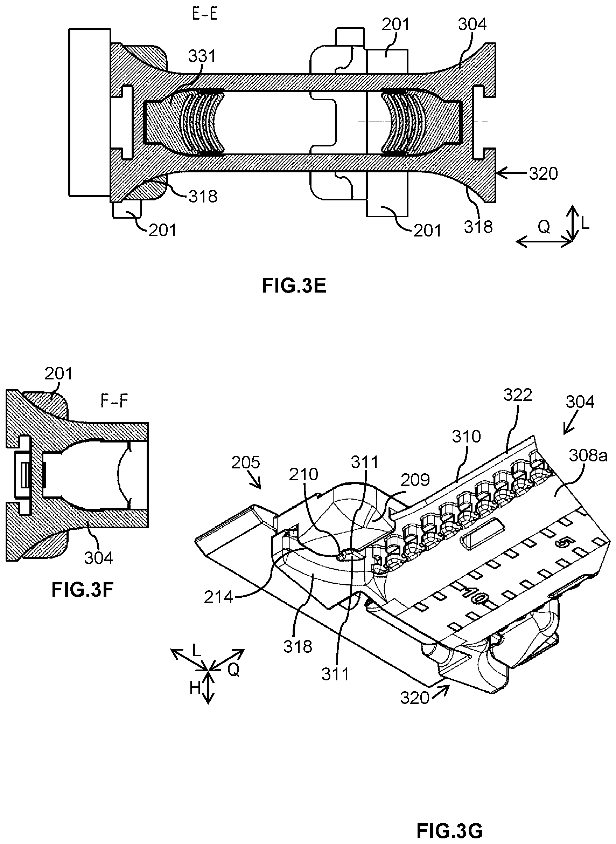

**FIG.3A-3F****:** ein Ausführungsbeispiel einer Energieführungskette mit Gleitkufen nach FIG.2A-2B: im Querschnitt durch einen Quersteg entlang A-A gemäß FIG.3C **(****FIG.3A****);** in Teilansicht seitens des Aufnahmeraumes **(****FIG.3B****);** ein Teilstück der Energieführungskette in Draufsicht **(****FIG.3C****);** ein Quersteg mit Gleitkufen gemäß FIG.2A-2B in Frontansicht **(****FIG.3D****);** der Quersteg mit zwei Gleitkufen im Längsschnitt entlang E-E gemäß FIG.3D **(****FIG.3E****),** ein Endbereich des Querstegs in Längsschnitt entlang F-F gemäß FIG.3D **(****FIG.3F****);** sowie der Endbereich des Querstegs nach FIG.3E in Perspektivansicht **(****FIG.3G****);**

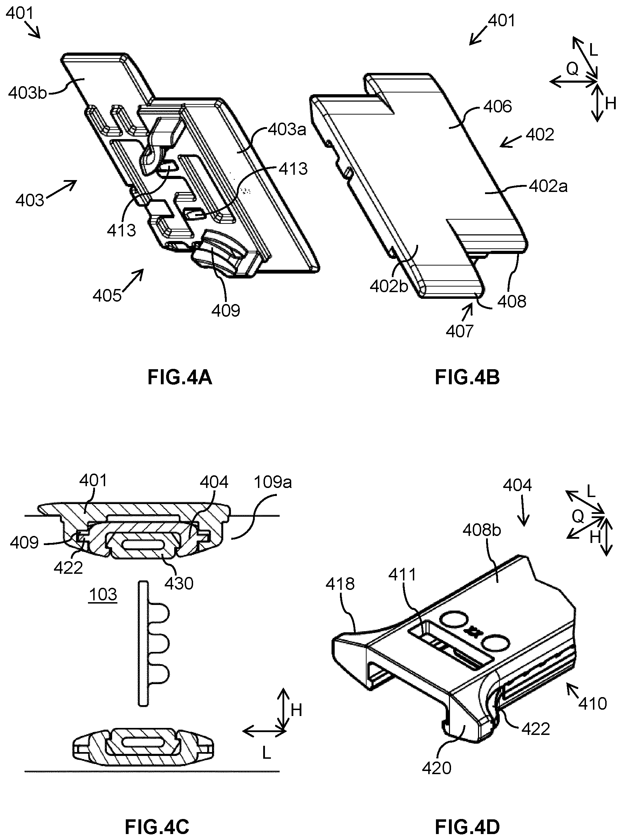

**FIG.4A-4D****:** ein weiteres Ausführungsbeispiel mit einer Gleitkufe, in Perspektivansicht auf deren Haltevorrichtung **(****FIG.4A****),** in Perspektivansicht auf die Gleitfläche **(****FIG.4B****),** ein Teilstück der Energieführungskette mit Gleitkufen nach FIG.4A im Querschnitt **(****FIG.4C****)** sowie ein Endbereich des Querstegs in Perspektivansicht **(****FIG.4D****);** und

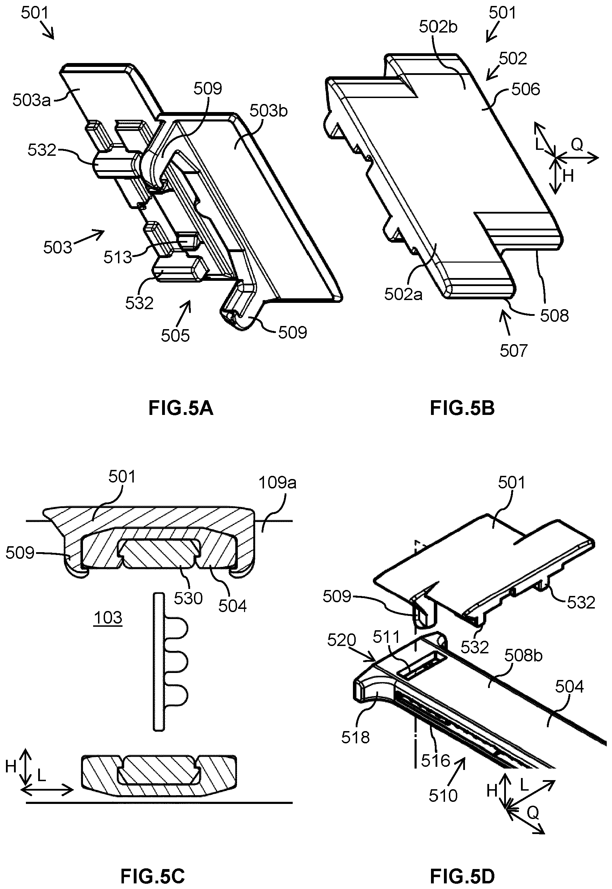

**FIG.5A-5D****:** ein weiteres Ausführungsbeispiel mit einer Gleitkufe, in Perspektivansicht auf die Haltevorrichtung **(****FIG.5A****);** die Gleitkufe in Perspektivansicht auf die Gleitfläche **(****FIG.5B****);** ein Teilstück der Energieführungskette mit Gleitkufen nach FIG.5A im Querschnitt **(****FIG.5C****)** sowie ein Endbereich des Querstegs mit einer losen Gleitkufe in Perspektivansicht **(****FIG.5D****).**

Die rein beispielhaft in FIG.1 gezeigte gleitende Energieführungsanordnung für lange Verfahrwege umfasst eine Energieführungskette 10, die in einer Führungsrinne 1 zwischen zwei Endpunkten 8, 9 des Verfahrwegs verfährt, und zwar unter Bildung eines Umlenkbereichs bzw. Umlenkbogens 3, eines Obertrums 4, der hier der mit einer beweglichen Anschlussstelle 6 verbundene verfahrende Trum ist sowie eines ruhenden Trums bzw. eines Untertrums 5, der mit einer feststehenden Anschlussstelle 7 verbunden ist. Die Energieführungskette 10 verfährt in einer Verfahrebene, die der Ebene der FIG.1A entspricht und in der die Längsrichtung L und die Höhenrichtung H senkrecht zur Längsrichtung L liegt. Die Umlenkachse U ist senkrecht zur Verfahrebene. Die Energieführungskette 10 führt Versorgungsleitungen in die Längsrichtung L von einer Energiequelle zu einem zu versorgenden Maschinenteil und ist hier in zwei Endpositionen dargestellt. Rechts in FIG.1A ist die bewegliche Anschlussstelle 6 komplett nach rechts zum ersten Endpunkt 8 ausgefahren, sodass der Obertrum 4 als kurzer freitragender Abschnitt vorliegt. Bei einer Bewegung der Anschlussstelle 6 nach links wird der Obertrum 4 sich zunächst auf dem Untertrum 5 auflegen und darauf abgleiten. Diese Zwischenposition der Energieführungskette 10 ist in FIG.1B bzw. FIG.1C in stark vergrößerter Teilansicht dargestellt. Wenn die bewegliche Anschlussstelle 6 an der feststehenden Anschlussstelle 7 vorbeigefahren ist, gleitet sie auf der Gleitschiene 2 weiter. Links in FIG.1A ist die bewegliche Anschlussstelle 6 komplett nach links zum zweiten Endpunkt ausgefahren, sodass der Obertrum 4 vollständig auf der Gleitschiene 2 aufliegt.

FIG.1C zeigt ein Teilstück der Energieführungskette 10 mit sechs Kettengliedern 102 des Untertrums 5 und zwei Kettengliedern 102 des auf dem Untertrum 5 abgleitenden Obertrums 4. Ein Glied 102 der Energieführungskette 10 ist aus zwei Seitenlaschen 103 und zwei diese Seitenlaschen 103 in der Querrichtung Q verbindenden Querstege 104 aufgebaut, wobei die Seitenlaschen 103 mit den Querstegen 104 einen Aufnahmeraum 105 für die zu führenden Versorgungsleitungen rund um die Längsrichtung L umgeben. Die Querstege 104 eines Kettenglieds 102 sind in der Höhenrichtung H voneinander beabstandet. Jede Seitenlasche 103 weist zwei lange Schmalseiten 107 und zwei Hauptseiten, nämlich die Hauptseite mit der dem Aufnahmeraum 105 zugewandten Innenfläche 109a sowie die Hauptseite mit der vom Aufnahmeraum 105 abgewandten Außenfläche 109b, auf. Eine der Schmalseiten 107 liegt an der im Umlenkbereich 3 innen liegenden Seite 16 der Energieführungskette 10. Jeder Quersteg 104 weist zwei Hauptseiten auf, eine dem Aufnahmeraum 105 zugewandte Unterseite 108a und eine dem Aufnahmeraum 105 abgewandte Oberseite 108b sowie zwei sich in die Querrichtung Q erstreckenden lange Stirnseiten 110 und zwei kurze sich in die Längsrichtung L erstreckenden Schmalseiten, die Stützflächen 111 zur Anlage an den Innenflächen 109a der Seitenlaschen 103 bilden.

Die Energieführungskette 10 ist an der im Umlenkbereich innen liegenden Seite 16, die der Umlenkachse U zugewandt ist, mit Gleitkufen 101 ausgestattet, welche die Schmalseiten 107 den Seitenlaschen 103 abdecken, sodass in der in FIG.1B dargestellten Zwischenposition die Gleitkufen 101, die an den Schmalseiten 107 der Seitenlaschen 103 des Obertrums 4 angebracht sind, an den Gleitkufen 101, die an den Schmalseiten 107 der Seitenlaschen 103 des Untertrums 5 angebracht sind, abgleiten. Die jeweiligen Schmalseiten 107 der Seitenlaschen 103 sind dadurch vor Verschleiß geschützt. Die Gleitkufen 101 sind aus einem anderen Kunststoff hergestellt als die Seitenlaschen, welche ggf. auch aus Metall ausgeführt sein können. Der Kunststoff der Gleitkufen 101 ist so gewählt, dass er gegenüber dem Material der Seitenlaschen 103 bzgl. des Abgleitens gleichen Materials aufeinander optimiertes Abriebverhalten, Verschleißverhalten und/oder Reibverhalten hat. Der Kunststoff kann einen günstigeren Reibwert aufweisen, insbesondere einen verbesserten Reibungskoeffizienten µ, und kann bspw. aus einem Tribopolymer, der Schmierstoffe umfasst, z.B. eingeschlossene Festschmierstoffe, bestehen.

Die Gleitkufen 101 sind abnehmbar an den Querstegen 104 der Glieder 102 der Energieführungskette 10 angebracht und können nach Bedarf ausgetauscht werden, ohne dass die Energieführungskette 10 aus der Führungsrinne 1 demontiert werden muss.

Die FIG.2-FIG.5 zeigen drei Ausführungsbeispiele der Energieführungskette bzw. der Gleitkufen, die ein erfindungsgemäßes Prinzip zur werkzeuglosen Montage und Demontage von Gleitkufen an den Querstegen nutzen, sich jedoch in Ausführungsdetails unterscheiden.

FIG.2A, 2B zeigen eine Gleitkufe 201 gemäß einem ersten Ausführungsbeispiel. Die Gleitkufe 201 ist plattenartig ausgeführt mit zwei Hauptseiten - einer Oberseite 202, die die Gleitfläche 206 bildet und eine der Gleitfläche 206 abgewandte Unterseite 203, an der eine Haltevorrichtung 205 zum Halten an einem Quersteg 304 vorgesehen ist. Ferner weist die Gleitkufe 201 zwei in die Längsrichtung L weisenden Stirnseiten 207 auf, die mit Auflaufschrägen 208 versehen sind.

Die Haltevorrichtung 205 umfasst zwei in Längsrichtung L voneinander beabstandete Halteelemente in Form von einander zugewandten Haltebacken 209, die zum Umgreifen von Stirnseiten 310 an den Enden eines Querstegs 304 ausgebildet sind sowie zwei in Längsrichtung L voneinander beabstandete Rastelemente, die als jeweils eine Hinterschneidung bzw. Rastkante 210 an der jeweiligen Haltebacke 209 ausgebildet sind, zum Hintergreifen eines Rastvorsprungs bzw. einer Rastnase 311 am Quersteg 304 (FIG.3B) in der Wirkstellung der Gleitkufe 201. Die Haltebacken 209 sind an den beiden Stirnseiten 207 der Gleitkufe 201 angeformt und zur Unterseite 203 der Gleitkufe 201 abgewinkelt. Somit hat die Haltevorrichtung 205 in Seitenansicht entlang der Querrichtung Q eine klammerartige Form. Die Haltebacken 209 weisen jeweils eine vorzugsweise konkave Anlagefläche 214 auf, die komplementär bzw. passend zu den vorzugsweise konvexen endseitigen Stirnflächen des Querstegs 304 geformt ist und in der Wirkstellung an diesen anliegt.

Die Gleitkufe 201 ist gekröpft ausgebildet mit zwei Flächenbereichen 203a, 203b an der Unterseite 203 und einem Versatz bzw. Versprung 203c in die Höhenrichtung H bzw. in die Richtung der Dicke bzw. Stärke der Gleitkufe 201 zwischen dem Flächenbereich 203a, 203b. Somit wird der Flächenbereich 203a in der bestimmungsgemäßen Wirkstellung der Gleitkufe 201 an der Oberseite 308b des Querstegs 304 aufliegen. An diesem Flächenbereich 203a sind die obengenannten Haltebacken 209 angeordnet. Der Flächenbereich 203b liegt wie eine Auflagefläche in der bestimmungsgemäßen Wirkstellung der Gleitkufe 201 auf der Schmalseite 107 auf.

Die Oberseite 202 bzw. die Gleitfläche 206 der Gleitkufe 201 umfasst ebenfalls zwei Flächenbereiche 202a, 202b, jedoch keinen Versatz dazwischen. Somit ist die Gleitfläche 206 eben. Der Flächenbereich 202b ist der seitlich äußere Gleitbereich, welcher in Wirkstellung in eine Schmalseite der jeweiligen Seitenlasche übergreift. Unterhalb des Flächenbereichs 202a bzw. des inneren Gleitbereichs sind die Haltebacken 209 angeordnet. Der Flächenbereich 202a ist in Längsrichtung L gegenüber dem Flächenbereich 202b versetzt. Die Gleitfläche 206 ist jedoch durchgehend, die Flächenbereiche 202a, 202b gehen nahtlos ineinander über.

FIG.3C zeigt die Gleitkufen 201 in Draufsicht auf die Oberseite bzw. auf die Gleitfläche 206. Die Gleitkufen 201 sind in der Wirkstellung gezeigt, d.h. auf die Querstege 304 der Energieführungskette 10 gemäß dem ersten Ausführungsbeispiel aufgesetzt. Hier ist gut sichtbar, dass die Flächenbereiche 202a, 202b der Gleitfläche 206 in Längsrichtung L gegeneinander versetzt sind. Dies erlaubt einen kleineren Radius im Umlenkbereich 3 der Energieführungskette 10, da die aufeinanderfolgenden Gleitkufen sonst die Biegung der Kette 10 sterisch stören würden.

FIG.3D zeigt eine Frontansicht auf die Stirnseite 310 des Querstegs 304 mit einer Gleitkufe 201 in Wirkstellung, wobei die Haltebacken 209 die Stirnseiten 310 an einem Ende des Querstegs 304 umgreifen. Es ist eine der beiden Zahnleisten 316 zu sehen, welche an der dem Aufnahmeraum 105 zugewandten Unterseite 308a des Querstegs 304 vorgesehen sind und zur Befestigung der Trennstege dienen.

FIG.3B und FIG.3G zeigen jeweils in Teilansicht ein Ende des Querstegs 304 von seiner Unterseite 308a, an der die zwei Zahnleisten 316 zu sehen sind, die durch Befestigungsrippen 322 flankiert sind, welche sich entlang der Stirnseiten 310 des Querstegs 304 erstrecken. Auf dem gezeigten Ende des Querstegs 304 befindet sich eine Gleitkufe 201 in Wirkstellung, d.h. die Haltebacken 209 der Gleitkufe 201 übergreifen endseitig die Befestigungsrippen 322 an den Stirnseiten des Querstegs 304. Dabei hintergreifen die Rastkanten 210 die Rastnasen 311 zur Verrastung der Gleitkufe 201 an dem Quersteg 304 gegen seitliche Verschiebung. Die Haltebacken 209 verhindern ein Ablösen der Gleitkufe in die Längsrichtung L und in die Höhenrichtung H, wobei die Rastnasen 311 ein Verrutschen in die Querrichtung Q entlang des Querstegs 304 verhindern.

Der Quersteg 304 weist an seinen beiden Enden (nur eines gezeigt) jeweils eine Verbreiterung 318 auf, sodass die Enden des Querstegs 304 eine größere Abmessung in die Längsrichtung L haben, d.h. breiter sind als der mittlere Bereich des Querstegs 304. Die Verbreiterung 318 ist durch stetig aufweitende bzw. in Bezug auf die Längsrichtung L stetig auseinandergehende Stirnflächen bzw. Flächen der Stirnseiten 310 im gezeigten endseitigen Bereich des Querstegs 304 gezeichnet. Die Anlageflächen 214 der Gleitkufe 201 sind komplementär zur vorzugsweise stetig gekrümmten Form der auseinandergehenden Stirnflächen 310 ausgebildet und liegen an diesen an.

Am jeweiligen verbreiterten Ende des Querstegs 304 ist eine Stützfläche 320 vorgesehen, die an der entsprechenden Innenseite 109a der Seitenlasche 103 anliegt, und zwar in einem Überlappungsbereich zweier Seitenlaschen 103 wie in FIG.3B zu sehen ist. Dank der Verbreiterung 318 hat die Stützfläche 320 eine größere Erstreckung in die Längsrichtung L als der Querschnitt des Querstegs 304 zwischen den endseitigen Verbreiterungen 318.

Die Gleitkufe 201 kann bei einer bereits bestehenden Energieführungskette 10 auf den Quersteg 304 in dem mittleren, weniger breiten Bereich des Querstegs 304 bzw. dem Bereich zwischen den Verbreiterungen 318 aufgesteckt und manuell zu einem Ende des Querstegs 304, d.h. zu einer Seitenlasche 103 des Kettenglieds 102 hin, verschoben sein bis sie auf der Verbreiterung 318 formschlüssig aufsetzt und anhand der Rastkanten 210 mit den Rastnasen 311 verrastet.

Zum Abnehmen der Gleitkufe 201 vom Quersteg 304 muss die Gleitkufe 201 lediglich manuell, durch ziehen seitlich bzw. in die Querrichtung Q zur Mitte des Querstegs 304 hin, entrastet und verschoben werden. Dann kann die Gleitkufe 201 an einer weniger breiten Stelle des Querstegs 304 von diesem leicht abgenommen werden.

Dank der oben beschriebenen Ausgestaltung der Haltevorrichtung 205 der Gleitkufe 201 kann diese leicht manuell und werkzeuglos auf den Quersteg 304 montiert und von diesem wieder abgenommen werden und ist trotzdem robust in der Wirkstellung mit dem Quersteg 304 verbunden.

Der Quersteg 304 ist im gezeigten Beispiel mittels eines Hebelmechanismus mit einem Befestigungsvorsprung 330 der Seitenlasche 103 an dieser befestigt, gemäß dem in WO 2020/152263 A1 der Anmelderin beschriebenen Prinzip, auf das hier zur Verkürzung durch Verweis Bezug genommen wird.

Die Gleitkufe 201 hat bevorzugt an ihrer Oberseite 202 eine Aussparung 230 für einen entsprechenden Betätigungshebel 331 des Querstegs 304 aus WO 2020/152263 A1, sodass dennoch eine relativ großflächige Gleitfläche möglich ist.

Bei der nachstehenden Beschreibung weiterer Ausführungsbeispiele gemäß den FIG.4A bis FIG.5D wird nur auf wesentliche Unterschiede zu dem in FIG.2A bis FIG.3G gezeigten Ausführungsbeispiel eingegangen.

FIG.4A-4D zeigen ein weiteres Ausführungsbeispiel einer nachrüstbaren Gleitkufe. Der Quersteg 404 in FIG.4C, 4D weist an jedem seiner Enden jeweils zwei kurze Befestigungsrippen 422 auf, die an den Verbreiterungen 418 von den Schmalseiten 410 vorstehen. Die in FIG.4A, 4B gezeigte Gleitkufe 401 hat an ihrer Unterseite 403 eine Haltevorrichtung 405, die passend zu den Befestigungsrippen 422 des Querstegs 404 ausgeführt ist. Als Halteelemente dienen bei diesem Ausführungsbeispiel ein Paar Vorsprünge mit einander zugewandten Haltenuten 409, die komplementär zu den Befestigungsrippen 422 geformt sind. Somit kommt die Befestigungsrippe 422 bei Aufschieben der Gleitkufe 401 in ihre Wirkstellung zum Formschluss mit der Haltenut 409.

Ferner weist die Haltevorrichtung 405 der Gleitkufe 401 zwei Rastelemente in Form von zwei Rastnocken 413 auf, die in der Wirkstellung in die Werkzeugöffnung 411 des Querstegs 404 eingreifen. Bei der Baureihe des Querstegs kann die Werkzeugöffnung 411 zum Ablösen des Querstegs von einem Rasthorn 430 der Seitenlasche standardmäßig vorgesehen sein. Das Rasthorn 430 ist an der Innenfläche 109a der jeweiligen Seitenlasche 103 zur rastenden Befestigung des Querstegs 404 vorgesehen.

FIG.5A-5D zeigen ein drittes Ausführungsbeispiel einer nachrüstbaren Gleitkufe. Der Quersteg 504 in FIG.5C, 5D weist ebenfalls eine Werkzeugöffnung 511 wie oben beschrieben auf. Die Gleitkufe 501 weist wie auch die Gleitkufe 401 zwei Rastelemente in Form von Rastnocken 513 auf, die mit der Werkzeugöffnung 511 des Querstegs 504 in der Wirkstellung einrasten. Ferner weist die Haltevorrichtung 505 der Gleitkufe 501 Halteelemente in Form von zwei in Längsrichtung L voneinander beabstandeten Halteklauen 509 auf. Die Halteklauen 509 stehen von der Unterseite 503 der Gleitkufe 501 vor und bilden eine Klammer mit C-förmigen Querschnitt, die den Quersteg 504 an seiner jeweiligen endseitigen Verbreiterung 518 umgreift bzw. umklammert. Da die Halteklauen 509 die Stirnseiten 510 des Querstegs 504 an seiner Verbreiterung umklammern, sind sie in die Längsrichtung L weiter voneinander beabstandet, als die Stirnseiten 510 des Querstegs 504 in seinem mittleren (bezgl. der Querrichtung Q) Bereich. Zwecks Führung beim Verschieben der Gleitkufe 501 entlang des Querstegs 504 in die Wirkstellung weist die Haltevorrichtung 505 ferner zwei Führungselemente 532 auf, deren Abstand in die Längsrichtung L voneinander der Breite des Querstegs bzw. seiner Anmessung in der Längsrichtung L in seinem mittleren Bereich zwischen den Verbreiterungen entspricht. Die Führungselemente 532 gleiten beim Verschieben der Gleitkufe 501 in die Wirkstellung an den Stirnseiten 510 des Querstegs 504 ab und liegen in der Wirkstellung an diesen an, und zwar versetzt relativ zu Halteklauen in der Querrichtung Q nach innen zum mittleren Bereich des Querstegs 504.

### Bezugszeichenliste

- 1: Führungsrinne
- 2: Gleitschiene
- 3: Umlenkbereich
- 4: Obertrum
- 5: Untertrum
- 6: bewegliche Anschlussstelle
- 7: feststehende Anschlussstelle
- 8: erster Endpunkt des Verfahrwegs
- 9: zweiter Endpunkt des Verfahrwegs
- 10: Energieführungskette
- 16: im Umlenkbereich innen liegende Seite der Energieführungskette
- 101; 201; 401; 501: Gleitkufe
- 102: Glied der Energieführungskette bzw. Kettenglied
- 103: Seitenlasche
- 104; 304; 404; 504: Quersteg
- 105: Aufnahmeraum
- 107a, 107b: Schmalseiten der Seitenlasche
- 108a; 308a; 408a: Unterseite des Querstegs
- 108b; 308b; 408b: Oberseite des Querstegs
- 109a: Innenfläche der Seitenlasche
- 109b: Außenfläche der Seitenlasche
- 110; 310; 410; 510: Stirnseite des Querstegs
- 111; 320; 420; 520: Stützfläche des Querstegs zum Anliegen an Seitenlasche
- 202; 402; 502: Oberseite der Gleitkufe
- 202a; 402a; 402a: innerer Gleitbereich
- 202b; 402b; 402b: äußerer Gleitbereich
- 203; 403; 503: Unterseite der Gleitkufe
- 203a; 403a; 503a: unterseitiger Flächenbereich der Gleitkufe
- 203b; 403b; 503b: unterseitige Auflagefläche der Gleitkufe
- 205; 405; 505: Haltevorrichtung der Gleitkufe
- 206; 406; 506: Gleitfläche der Gleitkufe
- 207; 407; 507: Stirnseite der Gleitkufe
- 208; 408; 508: Auflaufschräge der Gleitkufe
Halteelemente der Haltevorrichtung:
- 209: Haltebacke
- 409: Haltenut
- 509: Halteklaue
Rastelemente der Haltevorrichtung:
- 210: Rastkante
- 413; 513: Rastnocken
- 214; 414; 514: Anlageflächen der Halteelemente
- 230: Aussparung für Betätigungshebel
- 311: Vorsprung bzw. Rastnase am Quersteg
- 316; 516: Zahnleiste am Quersteg
- 318; 418; 518: Verbreiterung des Querstegs
- 322; 422: Befestigungsrippe
- 330: Befestigungsvorsprung der Seitenlasche
- 331: Betätigungshebel
- 411: Werkzeugöffnung an Oberseite des Querstegs
- 430; 530: Rasthorn an Innenfläche der Seitenlasche
- 532: Führungselement der Haltevorrichtung
- H: Höhenrichtung
- L: Längsrichtung
- Q: Querrichtung
- U: Umlenkachse

## Patentansprüche

1. Energieführungskette (10) zur Führung von Leitungen, wie z.B. Kabeln, Schläuchen oder dgl., zwischen zwei Anschlussstellen (6, 7), von denen mindestens eine zur anderen relativ beweglich ist, umfassend
eine Vielzahl von in Längsrichtung (L) verbundenen Gliedern (102), die zueinander verschwenkbar sind und jeweils zwei Seitenlaschen (103) und diese miteinander verbindende Querstege (104; ... 504) aufweisen, wobei die Energieführungskette (10) bei Relativbewegung der Anschlussstellen (6, 7) verfahrbar ist unter Bildung zweier Trume (4, 5), die über einen Umlenkbereich (3) ineinander übergehen,
wobei das eine Trum (4) auf dem anderen Trum (5) abgleiten kann und zum Abgleiten an der im Umlenkbereich (3) innen liegenden Seite (16) und an Gliedern (102) zumindest eines Längsabschnitts jeweils ein Paar Gleitkufen (101; ... 501) angeordnet sind, wobei beide Gleitkufen (101; ... 501) eines Paars jeweils mittels einer Haltevorrichtung (205; ... 505) an einem Quersteg (104; ... 504) befestigt sind und jeweils in Wirkstellung eine Schmalseite (107) einer der beiden Seitenlaschen (103) übergreifen;
**dadurch gekennzeichnet,**
**dass** zumindest der mit Gleitkufen (101; ... 501) versehene Quersteg (104; ... 504) an seinen beiden Enden jeweils eine Verbreiterung (318; 418; 518) zur Seitenlasche (103) hin aufweist, und
**dass** die Haltevorrichtung (205; ... 505) zwei in Längsrichtung (L) beabstandete und gegenüberliegende Halteelemente (209; 409; 509) aufweist, mit welchen die Haltevorrichtung (205; ... 505) zwischen den Verbreiterungen (318; 418; 518) auf den Quersteg (104; ... 504) aufsetzbar und seitlich nach außen in einen Eingriff mit einer der Verbreiterungen (318; 418; 518) verschiebbar ist, in welchem die gegenüberliegenden Halteelemente (209; 409; 509) zur Befestigung der Gleitkufe (101; ... 501) in Wirkstellung form- und/oder kraftschlüssig in bzw. hinter einen Bereich dieser Verbreiterung (318; 418; 518) greifen.

2. Kettenglied (102) für eine Energieführungskette (10) nach dem Oberbegriff aus Anspruch 1, wobei das Kettenglied zwei Seitenlaschen (103) und zwei diese verbindende Querstege (104; ... 504) umfasst, wobei an einem der Querstege (104; ... 504) zwei Gleitkufen (101; ... 501) jeweils mittels einer Haltevorrichtung (205; ... 505) befestigt sind und jeweils in Wirkstellung eine Schmalseite (107) einer der beiden Seitenlaschen (103) übergreifen; **dadurch gekennzeichnet, dass** zumindest der mit Gleitkufen (101; ... 501) versehene Quersteg (104; ... 504) an seinen beiden Enden jeweils eine Verbreiterung (318; 418; 518) zur Seitenlasche (103) hin aufweist, und
**dass** die Haltevorrichtung (205; ... 505) zwei in Längsrichtung (L) beabstandete und gegenüberliegende Halteelemente (209; 409; 509) aufweist, mit welchen die Haltevorrichtung (205; ... 505) zwischen den Verbreiterungen (318; 418; 518) auf den Quersteg (104; ... 504) aufsetzbar und seitlich nach außen in einen Eingriff mit einer der Verbreiterungen (318; 418; 518) verschiebbar ist, in welchem die gegenüberliegenden Halteelemente (209; 409; 509) zur Befestigung der Gleitkufe (101; ... 501) in Wirkstellung form- und/oder kraftschlüssig in bzw. hinter einen Bereich dieser Verbreiterung (318; 418; 518) greifen.

3. Nachrüstbare Gleitkufe (101; ... 501) für eine Energieführungskette (10), umfassend mindestens eine oberseitige Gleitfläche (206; 406; 506) und eine unterseitige Haltevorrichtung (205; ... 505) zur Befestigung der Gleitkufe (101; ... 501) an einem Glied (102) der Energieführungskette (10),
wobei die Haltevorrichtung (205; ... 505) zur Zusammenwirkung mit einer von zwei endseitigen Verbreiterungen (318; 418; 518) eines Querstegs (104; ... 504) gestaltet ist und hierzu zwei in Längsrichtung (L) beabstandete und gegenüberliegende Halteelemente (209; 409; 509) aufweist, mit welchen die Haltevorrichtung (205; ... 505) zwischen den Verbreiterungen (318; 418; 518) auf den Quersteg (104; ... 504) aufsetzbar und seitlich nach außen in einen Eingriff mit einer der Verbreiterungen (318; 418; 518) verschiebbar ist, wobei die gegenüberliegenden Halteelemente (209; 409; 509) form- und/oder kraftschlüssig in bzw. hinter einen Bereich dieser Verbreiterung (318; 418; 518) greifend gestaltet sind, wobei die Halteelemente (209; 409; 509) an einer bzw. von einer der Gleitfläche (206; 406; 506) abgewandten Unterseite (203; 403; 503) der Gleitkufe (101; ... 501) vorstehen und als einander zugewandte Haltebacken (209), Halteklauen (509) oder als Vorsprünge mit einander zugewandten Haltenuten (409) ausgeführt sind, **dadurch gekennzeichnet, dass**
die Haltevorrichtung (505) ferner ein Paar in Längsrichtung (L) voneinander und in eine Querrichtung (Q) von den Halteelementen (209; 409; 509) beabstandeter Führungselemente (532) aufweist, die bei einem Verschieben der Gleitkufe (501) in die Wirkstellung an Stirnseiten (510) des Querstegs (504) abgleiten.

4. Energieführungskette (10) nach Anspruch 1 bzw. Kettenglied (102) nach Anspruch 2 bzw. Gleitkufe (101; ... 501) nach Anspruch 3, **dadurch gekennzeichnet, dass** die Haltevorrichtung (205; 405; 505) mindestens ein Rastelement (210; 413; 513) aufweist, welches mit einem Vorsprung (311) und/oder einer Vertiefung (411; 511) am Quersteg (104; ... 504) verrastet, um die Gleitkufe (101; ... 501) gegen seitliche Verschiebung zu sichern in Wirkstellung der Gleitkufe (101; ... 501) bzw. bei Eingriff der Halteelemente (209; 409; 509) mit der jeweiligen Verbreiterung (318; 418; 518).

5. Energieführungskette (10) bzw. Kettenglied (102) bzw. Gleitkufe (101; ... 501) nach Anspruch 4, **dadurch gekennzeichnet, dass** die Haltevorrichtung (205; 405; 505) zwei in Längsrichtung (L) beabstandete Rastelemente (210; 413; 513) aufweist, welche
- jeweils mit einer von zwei stirnseitigen Rastnasen (311) an der Verbreiterung (318) des Querstegs (304) rastend zusammenwirken;
und/oder
- mit einer oberseitigen Werkzeugöffnung (411; 511), die zum Abtrennen des Querstegs (404; 504) vorgesehen ist, rastend zusammenwirken.

6. Energieführungskette (10) bzw. Kettenglied (102) nach einem der vorstehenden Ansprüche, **dadurch gekennzeichnet, dass** die Halteelemente (209; 409; 509) als einander zugewandte Haltebacken (209), Halteklauen (509) oder als Vorsprünge mit einander zugewandten Haltenuten (409) ausgeführt sind und an einer bzw. von einer der Gleitfläche (206; 406; 506) abgewandten Unterseite (203; 403; 503) der Gleitkufe (101; ... 501) vorstehen.

7. Energieführungskette (10) bzw. Kettenglied (102) bzw. Gleitkufe (101; ... 501) nach einem der vorstehenden Ansprüche, **dadurch gekennzeichnet, dass** die Halteelemente (209; 409; 509) um die in Längsrichtung (L) weisenden Stirnseiten (310; 410; 510) des zusammenwirkenden Bereichs der Verbreiterung (318; 418; 518) greifen und die Verbreiterung (318; 518) hintergreifen und/oder formschlüssig mit einer Vertiefung oder einem Vorsprung (422) an den in Längsrichtung (L) weisenden Stirnseiten (310; 410; 510) des entsprechenden Bereichs der Verbreiterung (318; 418; 518) zusammenwirken.

8. Energieführungskette (10) bzw. Kettenglied (102) nach einem der vorstehenden Ansprüche, **dadurch gekennzeichnet, dass** die Haltevorrichtung (505) ein Paar in Längsrichtung (L) voneinander beabstandeter Führungselemente (532) aufweist, die bei einem Verschieben der Gleitkufe (501) in die Wirkstellung an Stirnseiten (510) des Querstegs (504) abgleiten.

9. Energieführungskette (10) bzw. Kettenglied (102) bzw. Gleitkufe (101; ... 501) nach einem der vorstehenden Ansprüche, **dadurch gekennzeichnet, dass**
die Gleitkufe (101; ... 501) eine oberseitige Gleitfläche (206; 406; 506) aufweist mit einem seitlich äußeren Gleitbereich (202b; 402b; 502b), welcher in Wirkstellung eine Schmalseite (107) der jeweiligen Seitenlasche (103) übergreift und einem in Längsrichtung (L) versetzten inneren Gleitbereich (202a; 402a; 502a), unterhalb welchem die Haltevorrichtung (205; 405; 505) angeordnet ist,
wobei vorzugsweise unterhalb des äußeren Gleitbereichs (202b; 402b; 502b) eine unterseitige Auflagefläche (203b; 403b; 503b) zum Aufliegen auf der Schmalseite (107) der jeweiligen Seitenlasche (103) vorgesehen ist.

10. Energieführungskette (10) bzw. Kettenglied (102) bzw. Gleitkufe (101; ... 501) nach einem der vorstehenden Ansprüche, **dadurch gekennzeichnet, dass** die Gleitkufe (101; ... 501), insbesondere an jedem Gleitbereich (202a; 202b; ...502a, 502b), in Längsrichtung (L) weisende stirnseitige Auflaufschrägen (208; 408; 508) aufweist.

11. Energieführungskette (10) bzw. Kettenglied (102) bzw. Gleitkufe (101; ... 501) nach einem der vorstehenden Ansprüche, **dadurch gekennzeichnet, dass** die Halteelemente (209; 409; 509) jeweils eine Anlagefläche (214; 414; 514) aufweisen, die komplementär zu stetig ausweitenden Stirnflächen (310; 410; 510) an Enden des Querstegs (104; ... 504) geformt ist.

12. Energieführungskette (10) bzw. Kettenglied (102) bzw. Gleitkufe (101; ... 501) nach einem der vorstehenden Ansprüche, **dadurch gekennzeichnet, dass**
die Gleitkufe (101; ... 501) als separates einstückiges Kunststoffteil, insbesondere Spritzgussteil, hergestellt ist; und/oder
die Gleitkufe (101; ... 501) zumindest an den Gleitflächen einen Kunststoff aufweist mit bezüglich dem Material der Seitenlaschen optimierten Abriebverhalten, Verschleißverhalten und/oder Reibverhalten.

13. Energieführungskette (10) bzw. Kettenglied (102) nach einem der vorstehenden Ansprüche, **dadurch gekennzeichnet, dass** der Quersteg (104; ...504) mit seitlichen Stützflächen (320; 420; 520) seiner Verbreiterungen (318; 418; 518) an einer Innenfläche (109a) der jeweiligen Seitenlasche (103) anliegt; und
vorzugsweise mittels eines Hebelmechanismus (331) mit einem Befestigungsvorsprung (330) der Seitenlasche (103) befestigt ist, wobei die Gleitkufe (201) an ihrer Oberseite (202) eine Aussparung (230) für einen Betätigungshebel (331) des Querstegs (304) aufweist;
oder rastend mit einem Rasthorn (430) an der Innenfläche (109a) der jeweiligen Seitenlasche (103) befestigt ist.

## Claims

1. Energy chain (10) for guiding lines, such as e.g. cables, hoses or the like, between two connection points (6, 7), of which at least one is movable relative to the other, comprising
a plurality of links (102) connected in the longitudinal direction (L), which are pivotable relative to each other and each have two side plates (103) and cross bars (104; ... 504) connecting these to each other, wherein in the case of a relative movement of the connection points (6, 7), the energy chain (10) is movable, forming two runs (4, 5), which merge over a deflection area (3), wherein one run (4) can slide on the other run (5) and, for the sliding, in each case a pair of skids (101; ... 501) are arranged on the inner side (16) in the deflection area (3) and on links (102) of at least one longitudinal section, wherein both skids (101; ... 501) of a pair are fastened in each case to a cross bar (104; ... 504) by means of a holding device (205; ... 505) and in each case reach over a narrow side (107) of one of the two side plates (103) in the operative position;
**characterized**
**in that**, at both of its ends, at least the cross bar (104; ... 504) provided with skids (101; ... 501) has in each case a widening (318; 418; 518) towards the side plate (103), and
**in that** the holding device (205; ... 505) has two opposing holding elements (209; 409; 509), which are spaced apart in the longitudinal direction (L) and with which the holding device (205; ... 505) can be fitted onto the cross bar (104; ... 504) between the widenings (318; 418; 518) and can be displaced laterally outwards into an engagement with one of the widenings (318; 418; 518), in which engagement the opposing holding elements (209; 409; 509) engage in a positive-locking and/or force-locking manner in or behind an area of this widening (318; 418; 518) to fasten the skid (101; ... 501) in the operative position.

2. Chain link (102) for an energy chain (10) according to the preamble from claim 1, wherein the chain link comprises two side plates (103) and two cross bars (104; ... 504) connecting them, wherein two skids (101; ... 501) are fastened to one of the cross bars (104; ... 504) by means of a holding device (205; ... 505) each and in each case reach over a narrow side (107) of one of the two side plates (103) in the operative position;
**characterized in that** at both of its ends, at least the cross bar (104; ... 504) provided with skids (101; ... 501) has in each case a widening (318; 418; 518) towards the side plate (103), and **in that** the holding device (205; ... 505) has two opposing holding elements (209; 409; 509), which are spaced apart in the longitudinal direction (L) and with which the holding device (205; ... 505) can be fitted onto the cross bar (104; ... 504) between the widenings (318; 418; 518) and can be displaced laterally outwards into an engagement with one of the widenings (318; 418; 518), in which engagement the opposing holding elements (209; 409; 509) engage in a positive-locking and/or force-locking manner in or behind an area of this widening (318; 418; 518) to fasten the skid (101; ... 501) in the operative position.

3. Retrofittable skid (101; ... 501) for an energy chain (10), comprising at least an upper-side sliding surface (206; 406; 506) and an underside holding device (205; ... 505) for fastening the skid (101; ... 501) to a link (102) of the energy chain (10),
**wherein** the holding device (205; ... 505) is designed for cooperating with one of two end-side widenings (318; 418; 518) of a cross bar (104; ... 504) and, for this, has two opposing holding elements (209; 409; 509), which are spaced apart in the longitudinal direction (L) and with which the holding device (205; ... 505) can be fitted onto the cross bar (104; ... 504) between the widenings (318; 418; 518) and can be displaced laterally outwards into an engagement with one of the widenings (318; 418; 518), wherein the opposing holding elements (209; 409; 509) are designed to engage in a positive-locking and/or force-locking manner in or behind an area of this widening (318; 418; 518), wherein the holding elements (209; 409; 509) protrude on or from an underside (203; 403; 503) of the skid (101; ... 501) facing away from the sliding surface (206; 406; 506) and are embodied as mutually facing holding jaws (209), holding claws (509) or as protrusions with mutually facing holding grooves (409), **characterized in that** the holding device (505) has a pair of guide elements (532) spaced apart from each other in the longitudinal direction (L) and spaced apart from the holding elements (209; 409; 509) in a transverse direction (Q), which slide on front sides (510) of the cross bar (504) in the case of a displacement of the skid (501) into the operative position.

4. Energy chain (10) according to claim 1 or chain link (102) according to claim 2 or skid (101; ... 501) according to claim 3, **characterized in that** the holding device (205; 405; 505) has at least one latching element (210; 413; 513), which latches with a protrusion (311) and/or a depression (411; 511) on the cross bar (104; ... 504) in order to secure the skid (101; ... 501) against lateral displacement in the operative position of the skid (101; ... 501) or in the case of engagement of the holding elements (209; 409; 509) with the respective widening (318; 418; 518).

5. Energy chain (10) or chain link (102) or skid (101; ... 501) according to claim 4, **characterized in that** the holding device (205; 405; 505) has two latching elements (210; 413; 513) spaced apart in the longitudinal direction (L), which
- in each case cooperate in a latching manner with one of two front-side latching lugs (311) on the widening (318) of the cross bar (304);
and/or
- cooperate in a latching manner with an upper-side tool opening (411; 511), which is provided for detaching the cross bar (404; 504).

6. Energy chain (10) or chain link (102) according to one of the preceding claims, **characterized in that** the holding elements (209; 409; 509) are designed as mutually facing holding jaws (209), holding claws (509) or as protrusions with mutually facing holding grooves (409) and protrude on or from an underside (203; 403; 503) of the skid (101; ... 501) facing away from the sliding surface (206; 406; 506).

7. Energy chain (10) or chain link (102) or skid (101; ... 501) according to one of the preceding claims, **characterized in that** the holding elements (209; 409; 509) engage around the front sides (310; 410; 510), pointing in the longitudinal direction (L), of the cooperating area of the widening (318; 418; 518) and engage behind the widening (318; 518) and/or cooperate in a positive-locking manner with a depression or a protrusion (422) on the front sides (310; 410; 510), pointing in the longitudinal direction (L), of the corresponding area of the widening (318; 418; 518).

8. Energy chain (10) or chain link (102) according to one of the preceding claims, **characterized in that** the holding device (505) has a pair of guide elements (532) spaced apart from each other in the longitudinal direction (L), which slide on front sides (510) of the cross bar (504) in the case of a displacement of the skid (501) into the operative position.

9. Energy chain (10) or chain link (102) or skid (101; ... 501) according to one of the preceding claims,
**characterized in that**
the skid (101; ... 501) has an upper-side sliding surface (206; 406; 506) with a laterally outer sliding area (202b; 402b; 502b), which, in the operative position, reaches over a narrow side (107) of the respective side plate (103), and an inner sliding area (202a; 402a; 502a) offset in the longitudinal direction (L),
underneath which the holding device (205; 405; 505) is arranged,
preferably wherein an underside bearing surface (203b; 403b; 503b) for resting on the narrow side (107) of the respective side plate (103) is provided underneath the outer sliding area (202b; 402b; 502b).

10. Energy chain (10) or chain link (102) or skid (101; ... 501) according to one of the preceding claims,
**characterized in that** the skid (101; ... 501) has front-side ramps (208; 408; 508) pointing in the longitudinal direction (L), in particular on each sliding area (202a; 202b; ...502a, 502b).

11. Energy chain (10) or chain link (102) or skid (101; ... 501) according to one of the preceding claims, **characterized in that** the holding elements (209; 409; 509) each have a contact surface (214; 414; 514), which is formed complementary to continuously widening front faces (310; 410; 510) at ends of the cross bar (104; ... 504).

12. Energy chain (10) or chain link (102) or skid (101; ... 501) according to one of the preceding claims, **characterized in that**
the skid (101; ... 501) is produced as a separate, one-piece plastic part, in particular injection-moulded part; and/or,
at least on the sliding surfaces, the skid (101; ... 501) has a plastic with abrasion behaviour, wear behaviour and/or friction behaviour optimized with respect to the material of the side plates.

13. Energy chain (10) or chain link (102) according to one of the preceding claims, **characterized in that**
the cross bar (104; ...504) abuts on an inner surface (109a) of the respective side plate (103) with lateral supporting surfaces (320; 420; 520) of its widenings (318; 418; 518); and
is preferably fastened to a fastening protrusion (330) of the side plate (103) by means of a lever mechanism (331), wherein the skid (201) has a cutout (230) for an operating lever (331) of the cross bar (304) on its upper side (202);
or is fastened in a latching manner to a latching horn (430) on the inner surface (109a) of the respective side plate (103).

## Revendications

1. Chaîne porte-câbles (10) destinée à guider des conduites, telles que des câbles, des tuyaux ou similaires, entre deux points de raccordement (6, 7), dont au moins l'un est mobile par rapport à l'autre, comprenant
une pluralité de maillons (102) reliés dans la direction longitudinale (L), qui peuvent pivoter les uns par rapport aux autres et qui comportent chacun deux pattes latérales (103) et des traverses (104; ... 504) reliant celles-ci entre elles, la chaîne porte-câbles (10) pouvant se déplacer lors d'un mouvement relatif des points de raccordement (6, 7) en formant deux brins (4, 5) qui s'enchaînent l'un dans l'autre via une zone de renvoi (3),
l'un (4) des brins pouvant glisser sur l'autre brin (5) et, pour glisser sur le côté (16) situé à l'intérieur dans la zone de renvoi (3) et sur des maillons (102) d'au moins un tronçon longitudinal, une paire de patins de glissement (101; ... 501) sont disposés; les deux patins de glissement (101; ... 501) d'une paire étant chacun fixés à une traverse (104; ... 504) au moyen d'un dispositif de retenue (205; ... 505) et, en position active, s'engageant chacun sur un côté étroit (107) de l'une des deux pattes latérales (103);
**caractérisé en ce que**
la traverse (104; ... 504) munie de patins de glissement (101; ... 501) présente, à chacune de ses deux extrémités, un élargissement (318; 418; 518) vers la patte latérale (103), et
**en ce que** le dispositif de retenue (205; ... 505) comporte deux éléments de retenue (209; 409; 509) espacés dans la direction longitudinale (L) et situés en vis-à-vis, au moyen desquels le dispositif de retenue (205; ... 505) peut être placé sur la traverse (104; ... 504) entre les élargissements (318; 418; 518) et peut être déplacé latéralement vers l'extérieur pour venir en prise avec l'un des élargissements (318; 418; 518), dans laquelle les éléments de retenue opposés (209; 409; 509) destinés à la fixation du patin de glissement (101; ... 501) s'engagent, en position active, par liaison der forme et/ou par liaison de force, dans ou derrière une zone de cet élargissement (318; 418; 518).

2. Maillon de chaîne (102) pour une chaîne porte-câbles (10) selon le préambule de la revendication 1, le maillon de chaîne comprenant deux pattes latérales (103) et deux traverses (104; ... 504) reliant celles-ci, deux patins de glissement (101; ... 501) étant fixés respectivement sur l'une des traverses (104; ... 504) au moyen d'un dispositif de retenue (205; ... 505) et, en position active, s'engagent chacun sur un côté étroit (107) de l'une des deux pattes latérales (103); **caractérisé en ce qu'**au moins la traverse (104; ... 504) munie de patins de glissement (101; ... 501) présente, à chacune de ses deux extrémités, un élargissement (318; 418; 518) vers la patte latérale (103), et
**en ce que** le dispositif de retenue (205; ... 505) comporte deux éléments de retenue (209; 409; 509) espacés dans le sens longitudinal (L) et situés en vis-à-vis, au moyen desquels le dispositif de retenue (205; ... 505) peut être placé sur la traverse (104; ... 504) entre les élargissements (318; 418; 518) et peut être déplacé latéralement vers l'extérieur pour venir en prise avec l'un des élargissements (318; 418; 518), dans laquelle les éléments de retenue opposés (209; 409; 509) destinés à la fixation du patin de glissement (101; ... 501) s'engagent, en position active, par liaison de forme et/ou par liaison de force, dans ou derrière une zone de cet élargissement (318; 418; 518).

3. Patin de glissement (101; ... 501) pouvant être monté a posteriori sur une chaîne porte-câbles (10), comprenant au moins une surface de glissement supérieure (206; 406; 506) et un dispositif de retenue inférieur (205; ... 505) destiné à la fixation du patin de glissement (101; ... 501) sur un maillon (102) de la chaîne porte-câbles (10), le dispositif de retenue (205; ... 505) étant conçu pour coopérer avec l'un des deux élargissements d'extrémité (318; 418; 518) d'une traverse {104; ... 504) et comporte à cet effet deux éléments de retenue (209; 409; 509) espacés dans la direction longitudinale (L) et situés en vis-à-vis, au moyen desquels le dispositif de retenue (205; ... 505) peut être placé sur la traverse (104; ... 504) entre les élargissements (318; 418; 518) et peut être déplacé latéralement vers l'extérieur pour venir en prise avec l'un des élargissements (318; 418 ; 518), les éléments de retenue opposés (209; 409; 509) étant conçus pour s'engager par liaison de forme et/ou par liaison de force dans ou derrière une zone de cet élargissement (318; 418; 518), les éléments de retenue (209; 409; 509) faisant saillie sur une face inférieure (203; 403; 503) du patin de glissement (101; ... 501), située à l'opposé de la surface de glissement (206; 406; 506), et étant réalisés sous forme de mâchoires de retenue (209), de griffes de retenue (509) tournées l'une vers l'autre ou sous forme de saillies comportant des rainures de retenue (409) tournées l'une vers l'autre, **caractérisé en ce que** le dispositif de retenue (505) comporte en outre une paire d'éléments de guidage (532) espacés les uns des autres dans la direction longitudinale (L) et espacés des éléments de retenue (209; 409; 509) dans une direction transversale (Q), qui, lors d'un déplacement du patin de glissement (501) vers la position active, glissent le long des faces frontales (510) de la traverse (504).

4. Chaîne porte-câbles (10) selon la revendication 1, ou maillon de chaîne (102) selon la revendication 2, ou patin de glissement (101; ... 501) selon la revendication 3, **caractérisée en ce que** le dispositif de retenue (205; 405; 505) comporte au moins un élément d'encliquetage (210; 413; 513) qui s'enclenche avec une saillie (311) et/ou un renfoncement (411; 511) sur la traverse (104; ... 504), afin d'empêcher le patin de glissement (101; ... 501) contre tout déplacement latéral lorsque le patin (101; ... 501) est en position active ou lorsque les éléments de retenue (209; 409; 509) sont en prise avec l'élargissement correspondant (318; 418; 518).

5. Chaîne porte-câbles (10) ou maillon de chaîne (102) ou patin de glissement (101; ... 501) selon la revendication 4, **caractérisé en ce que** le dispositif de retenue (205; 405; 505) comporte deux éléments d'encliquetage (210; 413; 513) espacés dans la direction longitudinale (L), qui
- coopèrent chacun par encliquetage avec l'un des deux ergots d'encliquetage frontaux (311) situés sur l'élargissement (318) de la traverse (304);
et/ou
- coopèrent par encliquetage avec une ouverture d'outil supérieure (411; 511), prévue pour la séparation de la traverse (404; 504).

6. Chaîne porte-câbles (10) ou maillon de chaîne (102) selon l'une quelconque des revendications précédentes,
**caractérisée en ce que** les éléments de retenue (209; 409; 509) sont réalisés sous forme de mâchoires de retenue (209) tournées l'une vers l'autre, de griffes de retenue (509) ou de saillies comportant des rainures de retenue (409) tournées l'une vers l'autre, et font saillie sur une face inférieure (203; 403; 503) opposée à la surface de glissement (206; 406; 506) du patin de glissement (101; ... 501).

7. Chaîne porte-câbles (10) ou maillon de chaîne (102) ou patin de glissement (101 ; ... 501) selon l'une quelconque des revendications précédentes, **caractérisée en ce que** les éléments de retenue (209; 409; 509) s'engagent autour des faces frontales (310; 410; 510) orientées dans la direction longitudinale (L) de la zone de coopération de l'élargissement (318; 418; 518) et s'engagent derrière l'élargissement (318; 518) et/ou coopèrent par complémentarité de forme avec un renfoncement ou une saillie (422) sur les faces frontales (310; 410; 510) orientées dans la direction longitudinale (L) de la zone correspondante de l'élargissement (318; 418; 518).

8. Chaîne porte-câbles (10) ou maillon de chaîne (102) selon l'une quelconque des revendications précédentes,
**caractérisée en ce que** le dispositif de retenue (505) comporte une paire d'éléments de guidage (532) espacés l'un de l'autre dans la direction longitudinale (L), qui, lors d'un déplacement du patin de glissement (501) vers la position active, glissent le long des faces frontales (510) de la traverse (504).

9. Chaîne porte-câbles (10) ou maillon de chaîne (102) ou patin (101; ... 501) selon l'une quelconque des revendications précédentes, **caractérisée en ce que** le patin de glissement (101; ... 501) comporte une surface de glissement supérieure (206; 406; 506) avec une zone de glissement latérale extérieure (202b; 402b; 502b) qui, en position active, s'engage sur un côté étroit (107) de la patte latérale correspondante (103), et une zone de glissement intérieure (202a; 402a; 502a) décalée dans le sens longitudinal (L), au-dessous de laquelle est disposé le dispositif de retenue (205; 405; 505), une surface d'appui inférieure (203b; 403b; 503b) étant de préférence prévue sous la zone de glissement extérieure (202b; 402b; 502b) pour reposer sur le côté étroit (107) de la patte latérale correspondante (103).

10. Chaîne porte-câbles (10) ou maillon de chaîne (102) ou patin de glissement (101; ... 501) selon l'une quelconque des revendications précédentes, **caractérisé en ce que** le patin de glissement (101; ... 501) présente, en particulier au niveau de chaque zone de glissement (202a; 202b; ... 502a, 502b), des rampes d'accès frontales (208; 408; 508) orientées dans la direction longitudinale (L).

11. Chaîne porte-câbles (10) ou maillon de chaîne (102) ou patin de glissement (101; ... 501) selon l'une quelconque des revendications précédentes, **caractérisé en ce que** les éléments de retenue (209; 409; 509) présentent chacun une surface d'appui (214; 414; 514) qui est formée de manière complémentaire aux surfaces frontales (310; 410; 510) s'évasant progressivement à des extrémités de la traverse (104; ... 504).

12. Chaîne porte-câbles (10) ou maillon de chaîne (102) ou patin de glissement (101; ... 501) selon l'une quelconque des revendications précédentes, **caractérisé en ce que** le patin de glissement (101; ... 501) est fabriquée sous la forme d'une pièce en plastique monobloc distincte, en particulier d'une pièce moulée par injection; et/ou le patin de glissement (101; ... 501) comporte, au moins au niveau des surfaces de glissement, une matière plastique présentant des propriétés d'abrasion, d'usure et/ou de frottement optimisées par rapport au matériau des pattes latérales.

13. Chaîne porte-câbles (10) ou maillon de chaîne (l02) selon l'une quelconque des revendications précédentes,
**caractérisée en ce que** la traverse (104; ... 504) s'appuie, par les surfaces d'appui latérales (320; 420; 520) de ses élargissements (318; 418; 518), contre une surface intérieure (109a) de la patte latérale respective (103); et
est fixé, de préférence au moyen d'un mécanisme à levier (331), à une saillie de fixation (330) de la patte latérale (103), le patin de glissement (201) présentant, sur sa face supérieure (202) un évidement (230) destiné à un levier d'actionnement (331) de la traverse (304);
ou est fixée par encliquetage à une dent d'encliquetage (430) sur la surface intérieure (109a) de la patte latérale correspondante (103).
